# EUROPEAN PATENT APPLICATION

(11) **EP 3 848 228 A1**
(43) Date of publication of application: **14.07.2021**
(21) Application number: 19858524.2
(22) Date of filing: 19.07.2019
(51) Int. Cl.: B60L 15/20, B60L 58/12, B60L 53/10, B60Q 5/00

(54) **ELECTRIC CAR CAPABLE OF ADJUSTING SOUND**

(30) Priority: 04.09.2018 KR 20180105224
(71) Applicant: Park, Keun Ho, Daegu 42004 (KR)
(72) Inventor: PARK, Kye Jung, Daegu 42004 (KR); PARK, Keun Ho, Daegu 42004 (KR)
(74) Representative: González López-Menchero, Álvaro Luis
(86) International application number: PCT/KR2019/008938
(87) International publication number: WO 2020/050492

(57) **Abstract**

The present invention relates to an electric car and, more specifically, to an electric car capable of adjusting sounds, wherein sounds are output according to operation/traveling of the electric car such that the sense related to an electric car driving can be learned easily, safe driving is made possible, and unexpected accidents and theft can be prevented; and a sound manipulation device is formed inside a handle-type driving manipulation device so as to adjust playback of sounds and music output through the electric car such that playback of the sounds and music can be adjusted easily and safely.

## Description

### Technical Field

The present invention relates to an electric car and, more particularly, an electric car capable of adjusting sound which enables a driver to easily learn sense of driving the electric car and to safely drive by outputting sounds according to operation and driving of the electric car, prevents unexpected accidents and theft, and enables easy and safe control of sounds and sound playback by having a sound operator, which controls playback of sounds and music output from the electric car, in a handle-type drive operator.

### Background Art

In general, an electric car is a vehicle that drives a motor using electrical energy stored in a battery and uses a driving force from the motor as an entire or partial power source. Such an electric car is classified into a battery electric car that uses only the electrical energy of a battery as a power source and a hybrid electric car that has an internal combustion engine and uses power from the engine to charge a battery and/or drive the car. The electric car of the present invention, which is a concept including a battery electric car and a hybrid electric car, includes an automobile, a motorcycle, an electric scooter, a bicycle, etc.

As the brake system of the electric car, there are a mechanical brake system, a brake system that uses only regenerative braking force without recharging (recovering energy), and a regenerative brake system that recovers energy in a recharge type. First, since the mechanical brake system brakes using friction force, it changes kinetic energy of a vehicle into friction heat energy and discharges the friction heat energy to the atmosphere, thereby braking. The fundamental structure is composed of an operating mechanism that transmits operation force from a driver using links or hydraulic pressure and a disc-shaped structure that generates braking force using the operation force. However, since braking is achieved by removing rotational energy of wheels in this case, energy that is burned as heat due to friction is 100% lost. Further, the disc for braking and the pad surface holding the disc should be periodically replaced for maintenance due to heat and wear by friction.

A brake system that regenerates kinetic energy into electrical energy in braking by reusing energy that is 100% wasted in the following patent document unlike the case of extinguishing the kinetic energy of a car as heat in braking is the regenerative braking system. The regenerative brake system uses the entire energy excepting a braking force to generate electrical energy in braking and uses the electrical energy to charge a battery. Further, most of moment of inertia and kinetic energy depending on the driving speed of a car are converted into electrical energy at high efficiency by a generator and used as energy for driving a motor. Accordingly, there is an advantage that braking and power generation are simultaneously achieved.

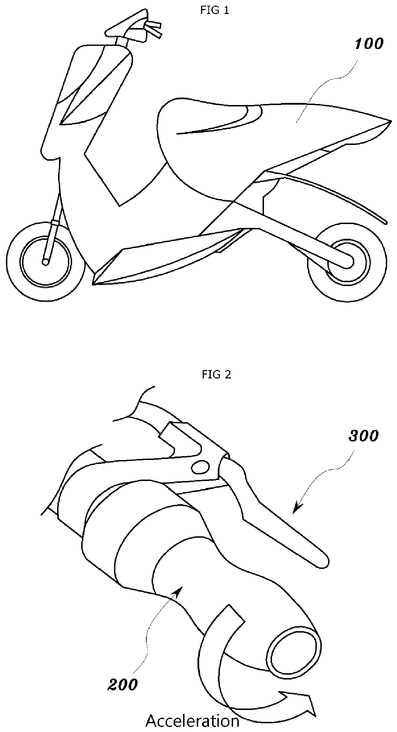

FIG. 1 is a perspective view of an electric scooter (100) that is a kind of electric car and FIG. 2 is a perspective view showing an example including a mechanical brake operator of the related art.

Referring to FIG. 1, an electric scooter (100) of the related art includes a twist throttle (200) that is an acceleration operation unit for accelerating the electric scooter (100) and a mechanical brake operator (300) disposed ahead of the twist throttle (200), in which a regenerative brake operator is provided as a switch, a button, or the like.

According to this structure, when the twist throttle (200) is rotated in one direction (counterclockwise in FIG. 2), the electric scooter is accelerated in proportion to the rotation angle. Further, the mechanical brake operator(300) is pulled to brake the electric scooter.

Accordingly, it is difficult to quickly operate a separate regenerative braking system, so there is a problem that the usability of the regenerative braking system is low.

Further, the electric car does not generate the noise that common motorcycles generate in acceleration, and it is difficult to feel braking operation even when braking the electric car because the regenerative brake operation system is provided as a common button or the like. Accordingly, since it is difficult to have feeling about braking of the electric car, an operational mistake is generated, which causes an accident.

### (Patent Document)

Korean Patent Application Publication No. 10-2017-0128650 (published on 2017. 11. 23), titled "Charging apparatus for regenerated brake power using of electric kick board".

### Disclosure

### Technical Problem

The present invention has been made in an effort to solve the problems described above and, an objective of the present invention is to provide an electric car capable of adjusting sound which enables a driver to easily learn sense of driving the electric car and to safely drive by outputting sounds according to operation and driving of the electric car, and prevents unexpected accidents and theft.

Another objective of the present invention is to provide an electric car capable of adjusting sound which enables easy and safe control of sounds and sound playback by having a sound operator, which controls playback of sounds and music output from the electric car, in a handle.

### Technical Solution

In order to achieve the objectives, the present invention is implemented by an embodiment having the following configuration.

According to an embodiment of the present invention, an electric car capable of adjusting sound that includes a regenerative brake system includes: a drive operator driving an electric motor of the electric car by rotating, a driving controller controlling driving and braking of the electric car, and a sound controller controlling sound generated by the electric car, in which the drive operator drives the electric car by rotating in a first direction, and is rotated in a second direction and returned to an initial position when the drive operator is released after being rotated, the driving controller operates the regenerative brake system in accordance rotation of the drive operator in the second direction, and the sound controller output a sound showing that a battery is being charged when the regenerative brake system is operated.

According to another embodiment, in the electric car capable of adjusting sound, the sound controller may include an acceleration sound output module outputting an acceleration sound of an engine when the electric car is accelerated by rotation of the drive operator, and a regenerative sound output module outputting a sound showing that the battery is being charged when the regenerative brake system is operated; and the acceleration sound output module and the regenerative sound output module may output different sounds that are discriminated.

According to another embodiment, in the electric car capable of adjusting sound, the sound controller may include: a preparation sound output module outputting a preparation sound showing that the electric car can be started when power is supplied to the electric car; a start sound output module outputting a start sound when the electric car is started after the preparation sound is output, and an engine sound output module outputting an engine sound showing that the electric car has been started after the start sound is output for a predetermined time.

According to another embodiment, the electric car capable of adjusting sound may include a regenerative brake operator controlling the regenerative brake system, in which the regenerative sound output module may include: a first regenerative sound output module outputting a sound showing that the battery is being charged when the regenerative brake system is operated in accordance with rotation of the drive operator in the second direction; and a second regenerative sound output module outputting a sound showing that the battery is being charged when the regenerative brake system is operated by the regenerative brake operator.

According to another embodiment, in the electric car capable of adjusting sound, the second regenerative sound output module may show that the battery is rapidly charged and rapid braking is performed by outputting a sound higher than the sound output by the first regenerative sound output module, and may control the output sound in accordance with the degree of operation of the regenerative brake operator. According to another embodiment, the electric car capable of adjusting sound may include a sound operator controlling sound output of the electric car, in which the sound controller may include a driving sound controller controlling sound related to driving such as acceleration and driving of the electric car, and a music playback controller controlling playback of music; the sound operator may include a mode changer controlling operation of a mode controller, an on-off unit playing or stopping music, a direction controller controlling volume or order of playback of music, and a repeat controller repeatedly playing music; and when the mode changer is pressed, output of a driving sound by the driving sound controller, output of music by the music playback controller, and a mute mode not outputting any sound may be sequentially selected.

According to another embodiment, in the electric car capable of adjusting sound, the direction controller may include a first direction controller and a second direction controller disposed symmetrically to each other, in which the first direction controller may select and play previous music when being pressed short and decreases volume when being pressed long, and the second direction controller may select and play next music when being pressed short and increases volume when being pressed long.

According to another embodiment, in the electric car capable of adjusting sound, the driving controller may include a drive operator rotation sensing module sensing rotation of the drive operator and a regenerative brake system operation module operating the regenerative brake system in accordance with rotation of the drive operator sensed by the drive operator rotation sensing module, in which the regenerative brake system operation module may operate the regenerative brake system when the drive operator rotating in an opposite direction after rotating in a direction for driving the electric motor is sensed or the drive operator returning to an initial position is sensed by the drive operator rotation sensing module.

According to another embodiment, in the electric car capable of adjusting sound, the driving controller may again drive the electric motor such that the electric motor returns to an original speed according to rotation of the drive operator when the drive operator rotates again in one direction while the regenerative brake system is operated.

### Advantageous Effects

The present invention can achieve the following effects by a combination and use relationship of the embodiments and the configuration to be described below.

According to the present invention, since the regenerative brake system is automatically operated and a sound showing that the battery is being charged when the regenerative brake system is operated is output, in accordance with rotation of the drive operator, there is an effect that a driver can recognize braking by the regenerative brake system.

According to the present invention, since an acceleration sound of the engine that is output when the electric car is accelerated by the drive operator and a regenerative sound that is output when the regenerative brake system is operated are differently output, there is an effect that a driver can easily discriminate and recognize acceleration and braking.

According to the present invention, since when the electric car is started, a start sound is output such that a driver can know that the electric car is started, and an engine sound is continuously output after the electric car is started, so there is an effect that a driver can know that the electric car has been started, whereby it is possible to prevent unexpected accidents and theft.

According to the present invention, since different regenerative sounds are output when the regenerative brake system is operated in accordance with rotation of the drive operator and the regenerative brake system is operated in accordance with operation of the regenerative brake operator, there is an effect that a driver can discriminate and recognize the operations.

According to the present invention, there is an effect that sounds and music that are output by the electric car can be easily controlled by operating the sound operator.

### Description of Drawings

FIG. 1 is a perspective view of an electric scooter that is a kind of electric car;
FIG. 2 is a perspective view showing an example including a mechanical brake operator of the related art;
FIG. 3 is a block diagram showing the configuration of a sound controller of an electric car according to an embodiment of the present invention;
FIG. 4 is a cross-sectional view showing an installation state of a sound operator;
FIG. 5 is an enlarged view of the sound operator;
FIG. 6 is a picture showing an actual installation example of the sound operator;
FIG. 7 is a perspective view of a drive operator and a brake operator;
FIG. 8 is a cross-sectional view showing a brake system of the electric car according to an embodiment of the present invention;
FIG. 9 is a block diagram showing the configuration of the driving controller;
FIG. 10 shows graphs illustrating the operation state of a regenerative brake system;
FIG. 11 is a view showing the structure of a brake operator according to another embodiment of the present invention;
FIG. 12 shows reference views illustrating an example of operating the brake operator shown in FIG. 11;
FIG. 13 is a view showing the structure of a brake operator according to another embodiment of the present invention;
FIG. 14 shows reference views illustrating an example of operating the brake operator shown in FIG. 13;
FIG. 15 is a view showing the structure of a brake operator according to another embodiment of the present invention;
FIG. 16 shows reference views illustrating an example of operating the brake operator shown in FIG. 15; and

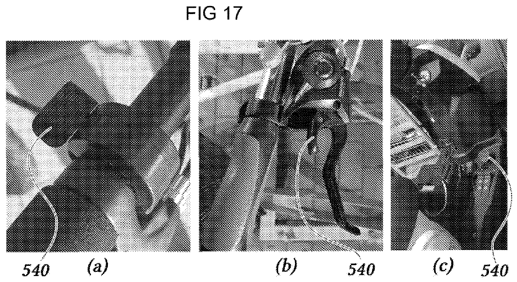

FIG. 17 shows pictures illustrating an installation example of a second brake operator.

### <Description of the Reference Numerals in the Drawings>

1: sound controller 11: driving sound controller 12: music playback controller 13: mode controller
2: sound operator 21: mode changer 22: on-off unit 23: direction controller
231: first direction controller 232: second direction controller 24: repeat controller
10: regenerative brake system 100: electric motor 110: stator 111: armature coil
120: rotor 121: permanent magnet 20: mechanical brake system 210: brake pad
220: disc 30: drive operator 40: driving controller
410: drive operator rotation sensing module 420: regenerative brake system operation module
430: initial braking value setting module 431: initial braking value 440: maximum braking value setting module
441: maximum braking value 450: braking sensing module 460: driving sensing module 470: determining module
50: brake operator 510: regenerative brake operator 520: mechanical brake operator
530: first brake operator 531: first rotation shaft 540: second brake operator
541: second rotation shaft 550: contact member 551: hole 552: body
553: protrusion 554: elastic member 560: pressing end 570: hydraulic pressure adjuster
571: button 572: elastic member 580: brake wire 60: rim 70: wheel
C: first operation stroke D: second operation stroke

### Best Mode

Hereafter, exemplary embodiments of an electric car capable of adjusting sound according to the present invention are described in detail with reference to the accompanying drawings. In the following description of the present invention, detailed descriptions of well-known functions or configurations relating to the present invention will not be provided so as not to obscure the point of the present invention with unnecessary details. Throughout the present specification, unless explicitly described otherwise, "comprising" any components will be understood to imply the inclusion of other components rather than the exclusion of any other components. Further, the terms "∼ part", "module", and the like mean a unit for processing at least one function or operation and may be implemented by hardware or software or by a combination of hardware and software.

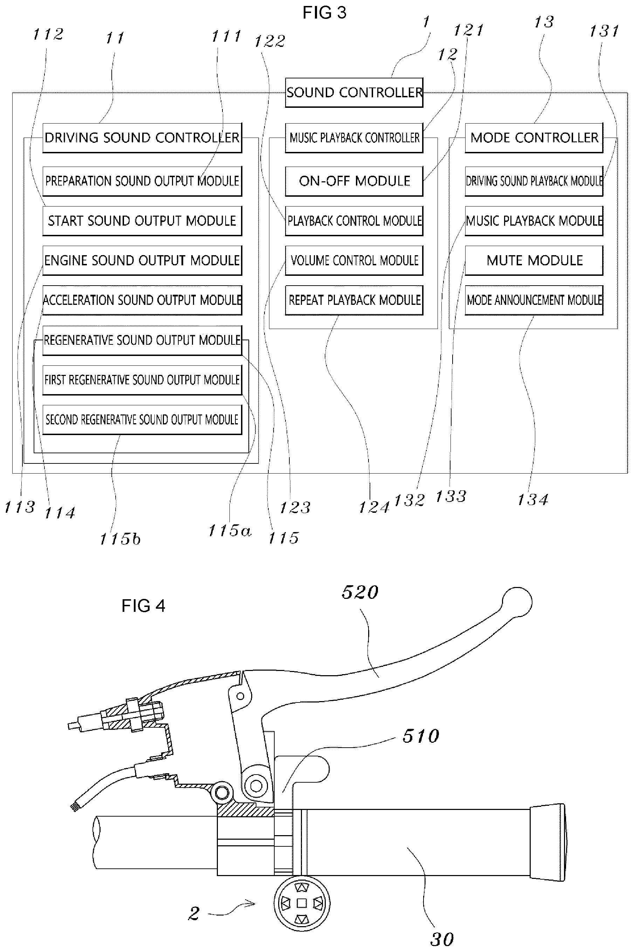

Referring to FIGS. 3 to 10, an electric car according to an embodiment of the present invention includes a regenerative brake system 10, a mechanical brake system 20, a brake operator 50 controlling the regenerative brake system 10 and the mechanical brake system 20, a drive operator 30 controlling an electric motor 100 for driving the electric car, and a driving controller 40 controlling driving and braking of the electric car. The electric car includes a sound operator 2 adjusting sound output of the electric car and a sound controller 1 controlling a sound that is generated by the electric car. The regenerative brake system 10 and the mechanical brake system 20, which are configured to decelerate the electric car, may be referred to as a brake system in combination, and will be described in detail hereafter.

The regenerative brake system 10 can be operated only by operating the drive operator 30 in the electric car according to the present invention. In more detail, when the drive operator 30 formed like a handle is rotated in one direction (counterclockwise in FIG. 2, the electric motor 100 is operated, whereby the electric car is moved forward. When the drive operator 30 is rotated in one direction and then released, the regenerative brake system 10 is automatically operated, whereby the physical inertia energy of the electric car can be absorbed and restored, quick braking is possible, and the electric car can be smoothly driven and braked through a simple operation. This will be described below.

The regenerative brake system 10 can be operated through a regenerative brake operator 510 to be described below in order to quickly and rapidly brake the electric car according to the present invention. When the regenerative brake operator 510 is operated, the regenerative brake system 10 having a power generation function is preferentially operated even though the electric motor 100 is in operation.

Accordingly, the electric motor 100 is operated by the drive operator 30 to accelerate the electric car according to the present invention. Further, when the drive operator 30 is released or the regenerative brake operator 510 is operated to brake the electric car, a battery is charged and braking is performed by the regenerative brake system 10. Accordingly, noise is not generated even though the electric car is not only accelerated, but braked, and a driver has difficulty in accurately recognize acceleration and deceleration, so the driver has difficulty in learning sense of driving. In particular, when the electric car is a motorcycle such as an electric scooter, a driver cannot accurately recognize acceleration and deceleration and accidents are increasing in spite of severe acceleration/deceleration and high risk of driving. Therefore, according to the present invention, sounds corresponding to acceleration and deceleration are output to enable a driver to feel the situations. Further, the sound operator 2 that can be operated to output sounds and play music is provided at the handle-shaped drive operator 30 in the electric car according to the present invention so that a driver can easily adjust output of sounds even during driving.

The sound controller 1, which is configured to control sounds that are generated by the electric car, as shown in FIG. 3, includes a driving sound controller 11 that controls output of sounds related to driving such as acceleration and braking, a music playback controller 12 that controls playback of music, and a mode controller 13 that controls the kinds of sounds that are output by the electric car.

The driving sound controller 11 outputs sounds that are generated when the electric car is accelerated and braked so that a driver can easily find the sense about driving of the electric car, and outputs various sounds about the operation state of the electric car so that the electric car can be safely operated. The driving sound controller 11 may include preparation sound output module 111, a start sound output module 112, an engine sound output module 113, an acceleration sound output module 114, and a regenerative sound output module 115.

The preparation sound output module 111, which enables a driver to know that the electric car is ready to start by outputting a sound when power is supplied to the electric car, can output a preparation sound when power supply is started by inserting and turning a key and then a separate start button is pressed. Accordingly, a driver can check whether the electric car is ready to start and whether the electric car currently consumes electricity.

The start sound output module 112, which outputs a start sound similar to that of a common motorcycle when the electric car is started, can output the start sound for a predetermined time when the start button is pressed. Accordingly, a driver can recognize that the electric car is started. Further, after starting, the engine sound is continuously output by the engine sound output module 113, so the driver can more securely recognize the started state.

The engine sound output module 113, which outputs an engine sound that is generated by a common motorcycle that has been started when the electric car is started, enables the start sound generated by the start sound output module 112 to be automatically converted into an engine sound after output for a predetermined time. However, the engine sound output module 113 does not output the engine sound when the start button has been pressed but the electric car is not started so that a driver can accurately recognize that the electric car has been started. Accordingly, the engine sound output module 113 enables a driver to accurately recognize that the electric car has been started so that the driver can know that the electric car can be accelerated when the drive operator 30 is operated, whereby it is possible to prevent unexpected accidents. Further, it prevents a driver from moving away from the electric car that has been started, thereby being able to prevent theft.

The acceleration sound output module 114, which outputs an acceleration sound when the electric car is accelerated when the driver operator 30 is operated, can output an engine sound that is generated when a common motorcycle is accelerated. The acceleration sound output module 114 can change the magnitude of the output acceleration sound in accordance with the degree of rotation of the drive operator 30, that is, the degree of acceleration so that a driver can accurately recognize the degree of acceleration of the electric car.

The regenerative sound output module 115, which outputs a sound enabling a driver to know that a battery is being charged when the regenerative brake system 10 is operated, outputs a sound different from the sound that is generated by the acceleration sound output module 114. The regenerative sound output module 115 can output different sounds when the regenerative brake system 10 is operated in accordance with rotation of the driver operator 30 and when the regenerative brake system 10 is operated by the regenerative brake operator 510. Accordingly, the regenerative sound output module 115 may include: a first regenerative sound output module 115a that outputs a sound when the regenerative brake system 10 is operated in accordance with rotation of the driver operator 30; and a second regenerative sound output module 115b that outputs a sound when the regenerative brake system 10 is operated by the operation of the regenerative brake operator 510.

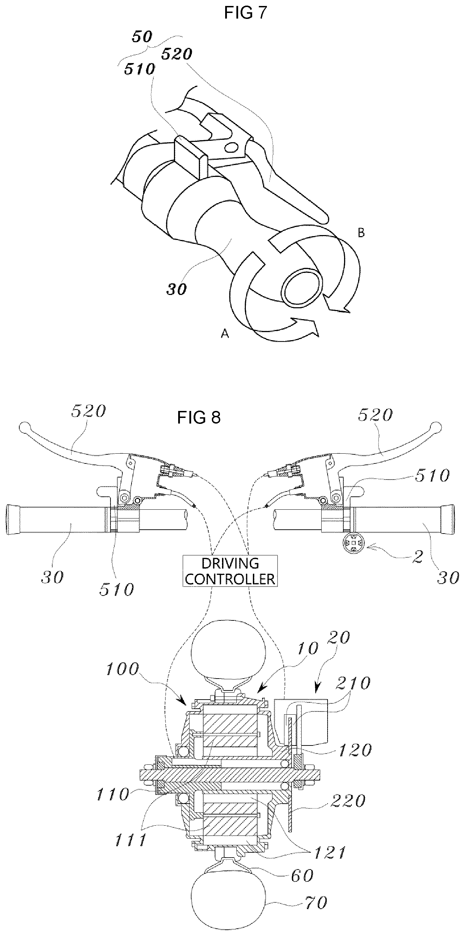

The first regenerative sound output module 115a, which outputs a sound enabling a driver to know that the battery is being charged when the regenerative brake system 10 is operated in accordance with rotation of the driver operator 30, can output a first regenerative sound when the drive operator 30 is operated in the direction opposite to the direction for acceleration or is returned to the initial position. According to the electric car of the present invention, as shown in FIG. 7, when the drive operator 30 is rotated in the direction A, the electric car is accelerated, and when the drive operator 30 is released, the drive operator 30 is automatically rotated in the direction B and returned to the initial position. As described below, when the drive operator 30 starts to be rotated in the direction B or is rotated in the direction B and returned to the initial position, the regenerative brake system 10 is operated and brakes the electric car while charging the battery. Accordingly, the first regenerative sound output module 115a enables a driver to recognize the operation of the regenerative brake system 10 such that the driver can know that the electric car is being braked, thereby enabling the driver to easily learn sense of driving.

The second regenerative sound output module 115b, which outputs a sound enabling a driver to know that the battery is being charged when the regenerative brake system 10 is operated by the regenerative brake operator 510, outputs a sound that is more intensive and higher than the first regenerative sound that is output by the first regenerative sound output module 115a. According to the present invention, the regenerative brake system 10 is automatically operated in accordance with rotation of the drive operator 30 such that the electric car can be smoothly braked and the battery can be charged. When the regenerative brake operator 510 is separately provided and rapid braking is required, the regenerative brake system 10 can be operated by operating the regenerative brake operator 510. Accordingly, the second regenerative sound output module 115b outputs a sound that is more intensive and higher than the first regenerative sound that can enable a driver to know rapid braking such that the driver can accurately recognize the rapid braking state.

The music playback controller 12, which controls playback of music that is output by the electric car, can adjust control in accordance with operation of the sound operator 2. The music playback controller 12 may include an on-off module 121, a playback control module 122, a volume control module 123, and repeat playback module 124.

The on-off module 121, which plays or stops music, plays or stops music in accordance with operation of the on-off unit 22 to be described below of the sound operator 2.

The playback control module 122, which controls the playback order of music, can return to and play previous music or play the next music. The playback control module 122, which can be controlled in accordance with operation of a direction controller 23 to be described below, can return to the previous music when a first direction controller 231 is pressed short, and can play the next music of the currently playing music when a second direction controller 232 is pressed short.

The volume control module 123, which controls the volume of playing music, can be controlled in accordance with operation of the direction controller 23 similar to the playback control module 122. The volume control module 123 can decrease the volume when the first direction controller 231 is pressed long and can increase the volume when the second direction controller 232 is pressed long.

The repeat control module 124, which repeatedly plays music that is being played, can repeat playback when a repeat controller 24 to be described below of the sound operator 2 is pressed.

The mode controller 13, which controls the kind of sounds that are output by the electric car, can change the kind of sounds when a mode changer 21 of the sound operator 2 is pressed. The mode controller 13 enables an engine sound, playback of a driving sound, playback of music, and a mute mode to be sequentially selected when the mode changer 21 is pressed, and enables announcement sounds corresponding to changed modes when the modes are changed. Accordingly, it is possible to output a driving sound when the electric car departs or stops such that a driver who does not have sense about the electric car can safely drive. Further, a driver who has sense of driving about the electric car can select music playback to play desired music. To this end, the mode controller 13 may include a driving sound playback module 131, a music playback module 132, a mute module 133, and mode announcement module 134.

The driving sound playback module 131, outputs sounds related to driving of the electric car that are output by the driving sound controller 11, outputs sounds related to operation and driving of the electric car such as the preparation sound, the start sound, the engine sound, the acceleration sound, and the first and second regenerative sounds.

The music playback module 132, which plays selected music, is controlled by the sound playback controller 12 to play music, and playback of music is controlled in accordance with operation of the sound operator 2.

The mute module 133, which stops sounds from being output from the electric car, stops any sounds such as the driving sound and music from being output.

The module announcement module 134, which outputs corresponding modes using sounds when the mode changer 21 is pressed and modes are changed, can output announcements about the driving sound, music playback, and muteness.

When the power key of the electric car is turned off and then power is supplied again to the electric car while a music mode for playing music is used, the driving sound playback module 131 may output the preparation sound, the start sound, and the engine sound.

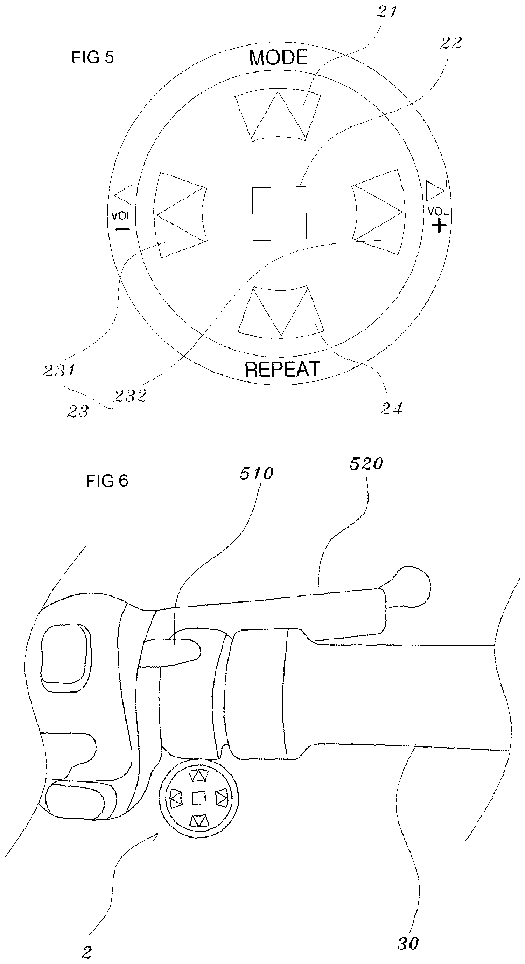

The sound operator 2, which is operated to adjust output of sounds of the electric car, may be disposed inside the handle-shaped drive operator 30 to be easily held by a driver, as shown in FIG. 4, and may be disposed under the regenerative brake operator 510 to be easily pressed by a thumb similar to the regenerative brake operator 510. The sound operator 2 may be a button that can be pressed, or may be pressed by a touch, depending on embodiments. The sound operator 2, as shown in FIG. 5, may be pressed at the center and four sides to be easily operated by a driver and may include the mode changer 21 for selecting the kind of sounds that are output by the electric car, the on-off unit 22 that plays or stops music, the direction controller 23 that controls the volume and the order of playback of music, and the repeat controller 24 that repeatedly plays music. The sound operator 2 may be used to set sound output through buttons, and may be used to select sounds that are not output of the preparation sound, the start sound, the engine sound, the acceleration sound, and the first and second regenerative sounds when the engine sound and the driving sound are output. Accordingly, the sound operator 2 enables sounds that are not output of the preparation sound, the start sound, the engine sound, the acceleration sound, and the first and second regenerative sounds when the on-off unit 22 is pressed several times. For example, the sound operator 2 can enable sounds that are not output to be selected and stored, depending on the number of times of pressing the on-off unit 22 such as making the preparation sound not be output when the on-off unit 22 is pressed 10 times, making the start sound not be output when the on-off unit 22 is pressed 11 times, and making the engine sound not be output when the on-off unit 22 is pressed 12 times. It is possible to turn off the preparation sound, the start sound, etc. by pressing the on-off unit 22 several times when the engine sound and the driving sound are selected to be output by the driving sound playback module 131.

The mode changer 21 changes the kind of sounds that are output by the electric car every time it is pressed. Further, the driving sound playback module 131, the music playback module 132, and the mute module 133 of the mode controller 13 are sequentially selected to output the driving sound or music or not to output any sound. The mode controller 13 may be an upper button, but, depending on cases, may be formed at the lower portion.

The on-off unit 22 plays or stops music in the music playback mode, and when the on-off unit 22 is pressed, the on-off module 121 is operated to play or stop music. The on-off unit 22 may be formed at the center portion and, depending on cases, may be formed at the upper and lower portions.

The direction controller 23, which controls the volume and the order of playback of music, may be symmetrically formed in a pair. The direction controller 23 may have a first direction controller 231 and a second direction controller 232 that are formed to be symmetric left and right, or, depending on cases, formed to be symmetric up and down. The first direction controller 231 may be formed at the left side to decrease volume or play all music and the second direction controller 232 may be formed at the right side to increase volume or play the next music. In order to simultaneously control the volume and the order of playback, the first and second direction controllers 231 and 232 may control the volume or the order of playback, depending on the pressing time. When they are pressed short, the order of playback may be controlled, and when they are pressed long, the volume may be controlled. Accordingly, when the first direction controller 231 is pressed short, all music is selected and played, and when it is pressed short, the volume is decreased. Further, when the second direction controller 232 is pressed short, the next music is selected and played, and when it is pressed short, the volume is increased.

The repeat controller 24 is for repeatedly playing the music that is being played, and when the repeat controller 24 is pressed, the repeat control module 124 is operated. The repeat controller 24 may be formed at the lower portion, but may be formed at the upper portion.

Hereafter, the electric car according to the present invention is described in more detail.

The regenerative brake system 10 is a system that applies braking by extinguishing kinetic energy while converting and absorbing kinetic energy of a wheel, which is the inertia moment energy of a car (which is called, 'regenerative braking' or 'recharging type braking'). In general, the electric motor 100 that provides a driving force by converting electrical energy into kinetic energy can operate as the regenerative brake system 10 that applies braking while charging a battery by converting kinetic energy into electrical energy. Referring to FIG. 8, a common electric motor 100 includes a stator 110 having an armature coil 111 wound around same and a rotor 120 having a permanent magnet 121 attached thereto. The electric motor 100 is operated in the principle that when electricity is applied to the armature coil 111, a magnetic field is generated and the permanent magnet 121 and the stator 120 are rotated, whereby a driving force is provided. Using this principle in the opposite way, when the kinetic energy of the rotor 120 is converted into electrical energy (i.e., when the armature coil 111 generates electrical energy using the permanent magnet 121 that is rotated), kinetic energy is extinguished, so the rotor 120 and rotation of a rim 60 attached thereto and a wheel 70 are stopped, whereby braking is possible. The regenerative brake system 10 refers to a component that applies braking by stopping rotation of the rotor 120 and rotation of the rim 60 attached thereto and the wheel 70 by extinguishing kinetic energy by generating electrical energy through the armature coil 111, using kinetic energy of the rotor 120 and the permanent magnet 121 that are rotated. In this case, the amount of power generation is proportioned to the magnitudes of speed and inertia, and a braking force is generated in proportion to the recharge amount of a batter based on the amount, that is, the magnitude of a current that is supplied to the battery. The electrical energy generated by the regenerative brake system 10 is stored in a separate battery (not shown) and is used later to operate the electric motor 100. The regenerative brake system 10 is automatically operated in accordance with rotation of the drive operator 30 to improve convenience and efficiency for a user, and may be operated in accordance with operation of the regenerative brake operator 510 to be described below of the brake operator 50. The regenerative brake system 10 is preferentially operated when the regenerative brake operator 510 is operated even though the electric motor 100 is being driven by operation of the drive operator 30, thereby quickly absorbing energy and simultaneously enabling recharging and rapid braking.

For reference, in the following description, a control mode that generates a driving force for rotating the rotor 120 and the rim 60 attached thereto and the wheel 70 by applying electricity to the electric motor 100 is referred to as a 'driving priority mode'. Further, a control mode that generates a braking force by stopping rotation of the rotor 120 and the rim 60 attached thereto and the wheel 70 by converting the rotation acceleration energy of the permanent magnet 121, which is rotated by kinetic inertia energy of the entire vehicle together with the rotor 120, into electrical energy through the armature coil 111 is referred to as a braking priority mode'. The mechanical brake system 20 is a system that implements a principle that applies braking by extinguishing kinetic energy of a car using a friction force. Referring to FIG. 8, a brake pad 210 is attached respectively to both sides of a disc 220 that is attached to a side of the rotor 120 mounted in a wheel of an electric scooter (an example of the electric car) and operates with the rotor 120. The brake pads 210 keep a distance from the disc 220 in an acceleration situation by operation control of the second brake operator 540, but when the mechanical brake operator 520 to be described below of the brake operator 50 is operated for braking, the brake pads 210 hold the disc 220 on both sides of the disc 220 by hydraulic pressure of a hydraulic device (not shown). Accordingly, the kinetic energy of the rotor 120 and the rim 60 attached thereto and the wheel 70 is converted into heat energy by the friction force between the disc 220 and the brake pads 210, so the kinetic energy is extinguished and then braking is performed.

The drive operator 30, which drives the electric motor 100 to move forward the electric car, as shown in FIG. 7, is formed like a handle, and may be configured to drive the electric motor when it is rotated in one direction, for example, in the direction A. Further, a separate elastic member (not shown) is disposed at the rotational center of the drive operator 30, so when the drive operator 30 is released after being rotated in the direction A, the drive operator 30 returns to the initial position. In this case, when the drive operator 30 is released and returned in the direction B, the regenerative brake system 10 can be automatically operated. Accordingly, a user can operate the regenerative brake system 10 only by releasing the drive operator 30 without operating a separate device for operating the regenerative brake system 10. Accordingly, it is possible to operate the regenerative brake system 10 that quickly and simply absorbs energy and it is also possible to smooth decelerate the electric car by slowly braking the electric car. Rotation of the drive operator 30 is sensed by a drive operator rotation sensing module 410 to be described below of the driving controller 40 such that the regenerative brake system 10 can be operated, and a separate sensor may be installed at the rotational center of the drive operator 30 to sense rotation. Therefore, according to the present invention, since the regenerative brake system 10 is operated when deceleration is performed by rotation of the drive operator 30 in the direction B, it is possible to absorb inertia energy and charge the battery within a natural range that a driver cannot feel while driving.

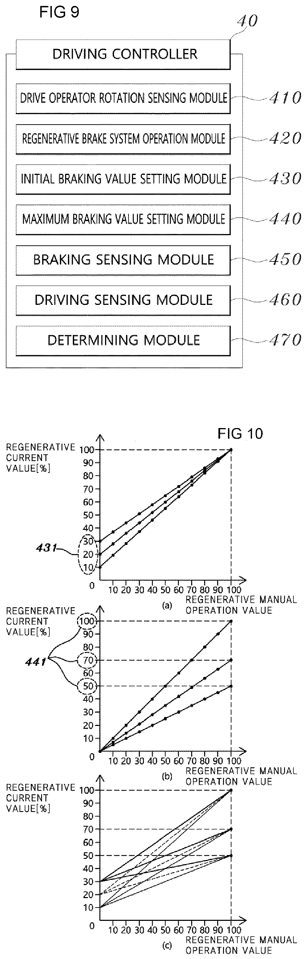

The driving controller 40, which controls operation about driving and braking of the electric car, as shown in FIG. 9, may include a drive operator rotation sensing module 410, a regenerative brake system operation module 420, an initial braking value setting module 430, a maximum braking value setting module 440, a braking sensing module 450, a driving sensing module 460, and a determining module 470. The drive operator rotation sensing module 410, which senses rotation of the drive operator 30, may sense rotational direction and angle, etc. by receiving a signal from a separate sensor (not shown) measuring rotation of the drive operator 30 and may start the regenerative brake system operation module 420.

The regenerative brake system operation module 420 operates the regenerative brake system 10 in accordance with rotation of the drive operator 30 that is sensed by the drive operator rotation sensing module 410. When reduction of wheel rotation by the drive operator 30 rotating in the direction A for driving the electric motor 100 and the rotating in the opposite direction B is sensed or when the drive operator 30 rotating in the direction B and returning to the initial position, that is, the position where the rotation angle is 0° is sensed, the regenerative brake system operation module 420 sends electrical energy to the battery to charge the battery. The regenerative brake system operation module 420 sends a predetermined amount of current for absorbing energy to the battery to charge the battery when rotation of the drive operator 30 in the direction B is sensed or the drive operator 30 returning to the initial position is sensed, whereby the wheel 70 can be braked. Further, the value of the predetermined amount of current is set by the initial braking value setting module 430.

The initial braking value setting module 430, which sets an initial braking value by the regenerative brake system operation module 420, sets the amount of a current that is supplied to the battery when rotation of the drive operator 30 in the direction B is sensed or the drive operator 30 returning to the initial position is sensed. FIG. 10(a) is a graph showing a braking value by the regenerative brake system 10 in accordance with operation of the regenerative brake operator 510 to be described below of the brake operator 50, in which the X-axis is an operation value by the regenerative brake operator 510 and the Y-axis is the degree of braking by the regenerative brake system 10. For example, the degree of braking that can be achieved by the regenerative brake system 10 may be divided and set in 10 steps or tens of steps [%]. An initial braking value 431 that is set by the initial braking value setting module 430 is the maximum limit value at which regenerative energy can be absorbed and stored when the electric car that is being driven is decelerated or the drive operator 30 is fully released. The initial braking value 431 may be set as 10, 20, 30%, ..., and up to 100%, as shown in FIG. 10(a). When the initial braking value 431 that is set by the initial braking value setting module 430 is large, the amount of an absorption current, that is, regenerative energy that is supplied to the battery when the drive operator is rotated in the direction B is increased, so the electric car is rapidly braked. When the initial braking value is small, the regenerative energy that is supplied to the battery is decreased, so the electric car can be slowly braked. The initial braking value setting module 430 may variously set the initial braking value in accordance with the kind, that is, the speed, the inertia moment, etc. of the applied car. When the speed of the electric car is gradually decreased in accordance with the initial braking value set by the initial braking value setting module 430, the regenerative brake system 10 can be operated later by operation of the regenerative brake operator 510.

The maximum braking value setting module 440, which sets the maximum braking value by the regenerative brake system 10 when the regenerative brake system 10 is operated by the regenerative brake operator 510, sets the amount of the maximum current that can be supplied to the battery in accordance with operation of the regenerative brake system 10, that is, the maximum limit value of the maximum absorption current. The regenerative brake system 10 performs braking in the early state by the value set by the initial braking value setting module 430 in accordance with rotation of the drive operator 30, and then braking is performed in accordance with operation of the regenerative brake operator 510. In this case, the amount of the maximum current that is supplied to the battery is set, whereby the degree of braking can be determined. In other words, the regenerative brake system 10 supplies a current to the battery in proportion to the degree of rotation of the regenerative brake operator 510, and correspondingly performs braking. In this case, the amount of maximum current that can be supplied to the battery by the regenerative brake system 10 in accordance with operation of the regenerative brake operator 510 is set, whereby the amount of current that is supplied in accordance with rotation of the regenerative brake operator 510, that is, the braking value can be determined. Accordingly, when the value set by the maximum braking value setting module 440 is large, a large amount of current is supplied to the battery in accordance with the degree of rotation, so that rapid braking is performed. When the maximum braking value is relatively small, a small amount of current is supplied in accordance with the degree of rotation so that braking is smoothly performed.

FIG. 10(b) is a graph showing an example when the initial braking value set by the initial braking value setting module 430 is 0, in which the degree of braking by operation of the regenerative brake operator 520 is shown. The maximum braking value setting module 440 sets the maximum braking value at which braking is achieved by the regenerative brake system 10, and the regenerative brake system 10 is operated at a predetermined ratio up to the set maximum braking value in accordance with rotation of the regenerative brake operator 510. For example, the maximum braking value setting module 440 may set the maximum braking value 441 as 100, 70, 50%, etc., as shown in FIG. 10(b), and an absorption current is supplied to the battery at a predetermined ratio in accordance with rotation of the regenerative brake operator 510 on the basis of the maximum value.

Accordingly, the regenerative brake system 10 performs braking by the initial braking value set by the initial braking value setting module 430 in accordance with rotation of the drive operator 30, as shown in FIG. 10(c). Further, when the regenerative brake operator 510 is operated, the regenerative brake system 10 performs braking in proportion to rotation of the regenerative brake operator 510 in accordance with the value set by the maximum braking value setting module 440.

The braking sensing module 450 senses that the regenerative brake operator 510 operates the regenerative brake system 10, and transmits a signal. When the brake operator 510 rotates and transmits a control signal for the regenerative brake system 10, the braking sensing module 450 receives the control signal and transmits a control signal to the regenerative brake system 10 and the regenerative brake system 10 converts kinetic energy into electrical energy, whereby an absorption current flows to the battery and braking can be performed. That is, when the braking sensing module 450 transmits a control signal for the regenerative brake system 10, the electric motor 100 enters the braking priority mode and operates as the regenerative brake system 10.

The driving sensing module 460 senses that the drive operator 30 drives the electric motor 100, and transmits a signal. When the drive operator 30 is rotated and a driving control signal for the electric motor 100 is transmitted to drive forward the electric car, that is, an electric scooter, the driving sensing module 460 receives and transmits the control signal to the electric motor 100 such that the electric motor 100 can generate a driving force. That is, when the driving sensing module 460 transmits a control signal for the electric motor 100, the electric motor 100 enters the driving priority mode and converts electrical energy into kinetic energy, thereby generating a driving force.

The determining module 470 receives and analyzes signals from the braking sensing module 450 and the driving sensing module 460. In particular, the determination module 470 makes the electric motor 100 enter the braking priority mode when a braking signal is transmitted to the braking sensing module 450 after a driving signal is transmitted from the driving sensing module 460. Accordingly, the electric motor 100 operates as the regenerative brake system 10 and changes kinetic energy into electrical energy, whereby the rim 60 and the wheel 70 are braked. According to the present invention, when the drive operator 30 is released, the regenerative brake system 10 is automatically operated, but braking is performed within a predetermined limit for smooth braking. Further, when the regenerative brake operator 510 is operated even though the electric motor 100 is being driven by the drive operator 30, the electric motor 100 preferentially operates as the regenerative brake system 10. Accordingly, a high current for absorbing energy for quick charging is supplied such that quick and rapid braking is possible in a sudden situation, etc.

Further, when a driving signal of the driving sensing module 460 is transmitted after a braking signal of the braking sensing module 450 is transmitted, the electric motor is operated for driving. When the drive operator 30 is rotated in the direction B and simultaneously the regenerative braking system 10 is operated, the operation of the regenerative braking system 10 may be stopped and the electric motor may be driven again when the drive operator 30 is rotated back in the direction A after rotating in the direction B. In this case, the electric motor is driven to be able to generate a speed set in advance in accordance with the degree of rotation of the drive operator 30, so driving according to rotation of the drive operator 30 can be continuously and uniformly performed. In other words, when the drive operator 30 is rotated in the direction B and the regenerative braking system 10 is operated, the degree of deceleration may increase in comparison to the past. Accordingly, when the drive operator 30 is rotated back in the direction A and the electric motor is driven, the electric motor may be further driven to be able to generate the original speed according to the degree of rotation.

The brake operator 50 controls the braking system including the regenerative brake system 10 and the mechanical brake system 20. For example, as shown in FIG. 7, the brake operator 50 may include the regenerative brake operator 510 controlling the regenerative brake system 10 and the mechanical brake operator 520 controlling the mechanical brake system 20. Accordingly, the regenerative brake operator 510 and the mechanical brake operator 520 control the regenerative brake system 10 and the mechanical brake system 20, respectively, when they are rotated, and when they are simultaneously operated, their operations may be simultaneously performed.

The regenerative brake operator 510 operates the regenerative brake system 10 when it is rotated such that the electric car is braked. In more detail, the regenerative brake operator 510 is disposed at a position inside the drive operator 30 where it can be rotated by a thumb of a user, and it operates the regenerative brake system 10 when it is rotated. The regenerative brake operator 510 may be configured to be rotated away from a user to operate the regenerative brake system 10, but may be configured to be rotated in the opposite direction to operate the regenerative brake system 10. When the regenerative brake system 10 is operated in accordance with rotation of the regenerative brake operator 510, a current is supplied to the battery from the electric motor. In this case, the current is supplied for braking by the maximum braking value set by the maximum braking value setting module 440. The regenerative brake operator 510 may be disposed at a position where it can be pushed by a thumb, as shown in FIG. 7, but may be formed at a position where it can be pressed by a thumb, or may be provided in a lever type at a specific position, or may be disposed at a position where it can be pressed by a foot to operate the regenerative brake system 10. Further, the regenerative brake operator 510 may be a Hall sensor, a resistance sensor, an optical sensor, etc. that generates a signal that is varied in accordance with rotation to variably operate the regenerative brake system 10. However, when the regenerative brake operator 510 is configured in an on/off type and is rotated a predetermined amount, the regenerative brake system 10 may be operated by a predetermined value.

The mechanical brake operator 520 operates the mechanical brake system 20 when it is rotated such that the electric car is braked. In more detail, when the mechanical brake operator 520 is pulled toward a user, the brake pads 210 come in contact with the disc 220, whereby rotation of the wheel 70 can be stopped. The mechanical brake operator 520 may operate a hydraulic device (not shown) when it is rotated such that the brake pads 210 are rotated, or may be connected with a brake wire, etc. such that the brake pads 210 are operated when the brake wire is pulled. According to the electric car of the present invention, when the drive operator 30 is rotated and the released, the regenerative brake system 10 is automatically operated for braking. Further, the regenerative brake system 10 can be preferentially operated by operation of the regenerative brake operator 510. However, since the mechanical brake operator 520 that operates the mechanical brake system 20 is separately provided, rapid braking is possible through mechanical braking in an emergency. However, according to the present invention, even though rapid braking is performed through the mechanical brake system 20, the regenerative brake system 10 is operated in advance by the regenerative brake system operation module 420, so the frequency of using the mechanical brake system 20 can be reduced and smoother braking is possible.

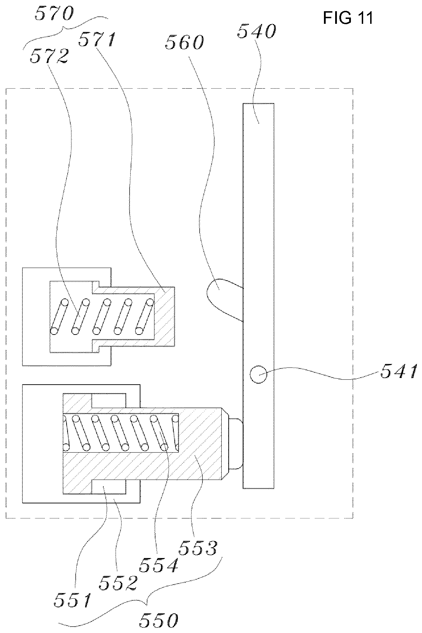

An electric car according to another embodiment of the present invention is described with reference to FIGS. 11 to 16. The electric car, the same as the previous embodiment, includes the regenerative brake system 10, the mechanical brake system 20, the drive operator 30, and the driving controller 40. However, the brake operator 50 of the electric car of this embodiment is not configured such that the regenerative brake operator 510 controls the operation of the regenerative brake system 10 and the mechanical brake operator 520 controls the operation of the mechanical brake system 20, as in the previous embodiment, but is configured such that any one of a first brake operator 530 and a second brake operator 540 is configured to be able to control both of the regenerative brake system 10 and the mechanical brake system 20. In the following description, the brake operator 50 refers to the any one of the first brake operator 530 and the second brake operator 540 that controls the regenerative brake system 10 and the mechanical brake system 20. The brake operator 50 of this embodiment is characterized by being configured to be able to control only the regenerative brake system 10 within a first operation stroke from the start and to simultaneously control the regenerative brake system 10 and the mechanical brake system 20 within a second operation stroke after the first operation stroke. For reference, the case in which the regenerative brake system 10 and the mechanical brake system 20 are simultaneously operated from the first operation stroke is not excluded. Accordingly, it is possible to more quickly and simply operate the brake system by operating the regenerative brake system 10 and the mechanical brake system 20 through one brake operator 50 rather than separately operating them. Any one of the regenerative brake system 10 and the mechanical brake system 20 may be provided or both of them may be provided.

First, the case in which the regenerative brake system 10 and the mechanical brake system 20 are both controlled by the second brake operator 540 is described with reference to FIGS. 11 to 12.

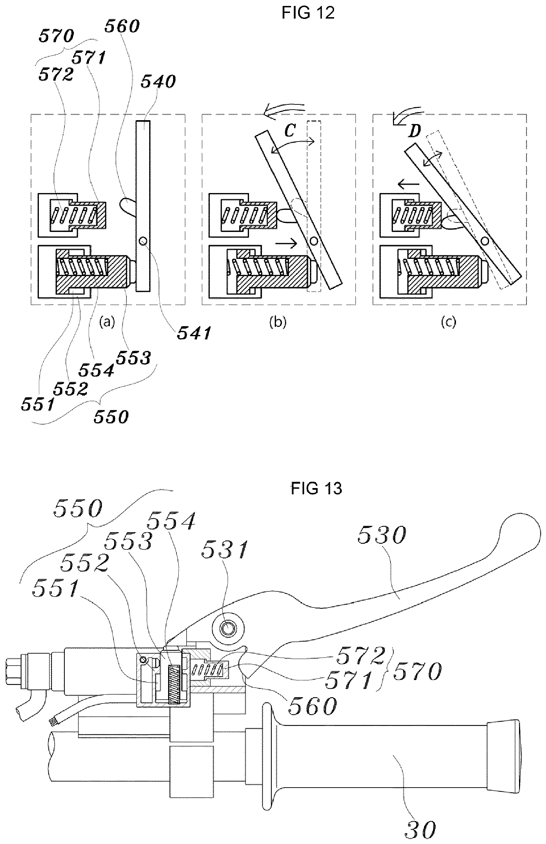

The second brake operator 540 controls the regenerative brake system 10 and the mechanical brake system 20. As shown in FIG. 12, the second brake operator 540 is configured to control only the regenerative brake system 10 within the first operation stroke C from the start while rotating about a second rotation shaft 541 (see FIG. 12(b)), and simultaneously control the regenerative brake system 10 and the mechanical brake system 20 within the second operation stroke D after the first operation stroke C (see FIG. 12(c)). Referring to FIG. 11, the second brake operator 540 is formed like a switch that is operated about the second rotation shaft 541, so when the second brake operator 540 is pressed by a user, it is rotated away from the user and controls the brake system 10 and/or the mechanical brake system 20. When the second brake operator 540 pressed by the user is released, it is rotated toward the user (for this operation, a separate elastic member (not shown) such as spring is disposed at the second rotation shaft 541 to provide elasticity for rotating the operator toward the user) and returned to the position before it is pressed. In this configuration, as shown in FIG. 11, a contact member 550 that keeps in contact with a surface of the second brake operator 540 while the second brake operator 540 is rotated within the first operation stroke is disposed at an end of the second brake operator 540. Further, a hydraulic pressure adjuster 570, which transmits a control signal for operating the hydraulic device (not shown) of the mechanical brake system 20 when a button 571 is pressed by a pressing end 560 of the second brake operator 540 while the second brake operator 540 is rotated about the second rotation shaft 541 within the second stroke D, is disposed at the opposite side of the contact member 550 with the second rotation shaft 541 therebetween.

The contact member 550, which operates the regenerative brake system 10 by generating and transmitting an electrical signal to the driving controller 40 while coming in contact with or separating from the second brake operator 540, may be a sensing device such as a Hall sensor. Referring to FIG. 11, the contact member 550 has a body 552 having a hole 551 therein and forming a frame, and a protrusion 553 inserted in the hole 551 of the body 552 and having an end protruding outward in contact with a surface of the second brake operator 540 and another end being in contact with an elastic member 554 in the hole 551. When the second brake operator 540 is rotated within the first operation stroke C and the pressure that presses the protrusion 553 is decreased, the protrusion 553 further protrudes outward by elasticity of the elastic member 554, so an electrical signal that is changed in accordance with the degree of protruding of the protrusion 553 or an on-off type control signal is transmitted to the driving controller 40.

The hydraulic pressure adjuster 570 transmits an operation signal for the hydraulic device (not shown) that operates the mechanical brake system 20 using hydraulic pressure. As shown in FIG. 11, the hydraulic pressure adjuster 570 is positioned such that the button 571 at an end is pressed by the pressing end 560 of the second brake operator in accordance with rotation of the second brake operator 540. As shown in FIGS. 12(a) and 12(b), when the second brake operator 540 is rotated downward within the period of the first operation stroke C, as described above, the protrusion 553 of the contact member 550 further protrudes and the degree of operation of the regenerative brake system 10 is controlled step by step within 1∼100% in accordance with the degree of protruding of the protrusion 553. Thereafter, as shown in FIG. 12(c), when the second brake operator 540 is rotated within the period of the second operation stroke D, the button 571 at an end of the hydraulic adjuster 570 is pressed by the pressing end 560 of the second brake operator 540 and a signal for controlling the degree of operation of the hydraulic device (not shown), which operates the mechanical brake system 20 using hydraulic pressure, step by step within 1∼100% in accordance with the pressed degree of the button 571 is transmitted, in which an on-off type control signal may be transmitted. In this case, the pressing end 560 of the second brake operator 540 may have a length and gap (which is the gap between the pressing end 560 and the button 571) such that it can press the button 571 by coming in contact with the button 571 of the hydraulic pressure adjuster 570 from the second operation stroke D without coming in contact with the button 571 of the hydraulic adjuster 570 even though rotating until the first operation stroke C. The button 571 of the hydraulic pressure adjuster 570 may be supported by a separate elastic member 571 (which may be the spring shown in FIG. 11) such that it can be returned to the initial position when the pressing force by the pressing end 560 of the second brake operator 540 is removed.

The operation process of the second brake operator 540 according to another embodiment of the present invention is described with reference to FIG. 12. As shown in FIG. 12(a), before a user presses the second brake operator 540, a surface of the second brake operator 540 keeps pressing the protrusion 553 of the contact member 550, in which the not only the regenerative brake system 10, but the mechanical brake system 20 are not operated. Thereafter, as shown in FIG. 12(b), when the user starts to press the second brake operator 540 and the second brake operator 540 is rotated within the first operation stroke C, the surface of the second brake operator 540 pressing the protrusion 553 is gradually moved away from the protrusion 553 and the protrusion 553 further protrudes outside by the elasticity of the elastic member 554. A signal that enables controlling the degree of operation of the regenerative brake system 10 step by step within 1∼100% with the intensity of an electrical signal that is varied in accordance with the degree of protruding of the protrusion 553 (if necessary, a signal for turning on/off the regenerative brake system 10) is transmitted to the driving controller 40. Thereafter, as shown in FIG. 12(c), when the user keeps pressing the second brake operator 540 and the second brake operator 540 is rotated within the period of the second operation stroke D, the pressing end 560 of the second brake operator 540 presses the button 571, so the mechanical brake system 20 can also be operated. Obviously, the regenerative brake system 10 and the mechanical brake system 20 may be operated together from the first operation stroke C.

In another embodiment of the present invention described above, both of the regenerative brake system 10 and the mechanical brake system 20 can be controlled in accordance with the degree of operation through only one operation by operating the second brake operator 540, so operation can be simple and quick.

Next, the case in which the regenerative brake system 10 and the mechanical brake system 20 are controlled together by the first brake operator 530 is described with reference to FIGS. 13 to 14.

The first brake operator 530 is formed like a lever, is rotated about the first rotation shaft 531, and controls the regenerative brake system 10 and the mechanical brake system 20 using the contact member 550 and the hydraulic pressure adjuster 570. Accordingly, when the first brake operator 530 is rotated about the first rotation shaft 531, the pressure of the first brake operator 530 pressing the protrusion 553 of the contact member 550 decreases in the first operation stroke C, so the protrusion 553 protrudes and accordingly, the regenerative brake system 10 is operated. In the second operation stroke D, the pressing end 560 formed at the first brake operator 530 presses the button 571 of the hydraulic pressure adjuster 570, whereby the mechanical brake system 20 is also operated. Accordingly, even though the regenerative brake system 10 and the mechanical brake system 20 are both controlled by the first brake operator 530, the operation can be controlled by a variable control signal or an on-off type control signal. The principle of controlling the regenerative brake system 10 and the mechanical brake system 20 is the same as that in the embodiment shown in FIGS. 11 to 12, this is not described in detail.

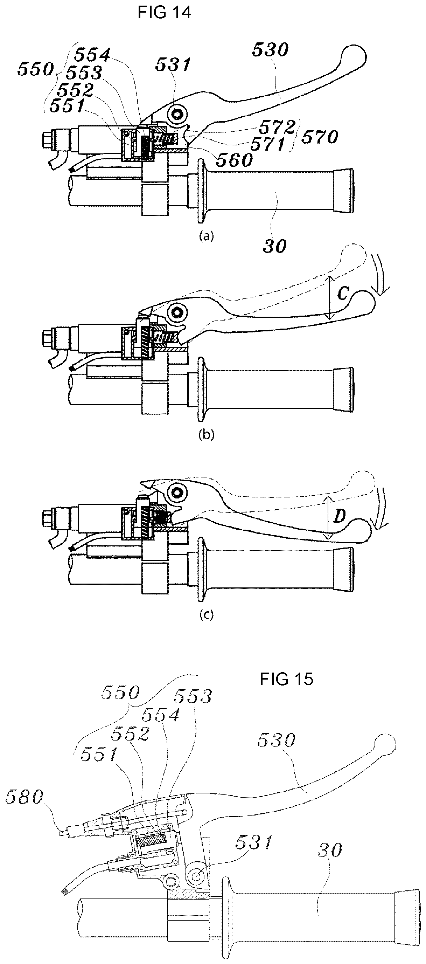

FIGS. 15 to 16 shows the case in which the regenerative brake system 10 and the mechanical brake system 20 are both controlled by the first brake operator 530, which is different from the embodiment described above in that the mechanical brake system 20 is operated by a brake wire 580 connected to a side of the first brake operator 530. Accordingly, in this embodiment, the mechanical brake system 20 is pulled by the first brake operator 530 while the first brake operator 530 is rotated within the second operation stroke D, thereby operating the mechanical brake system 20.

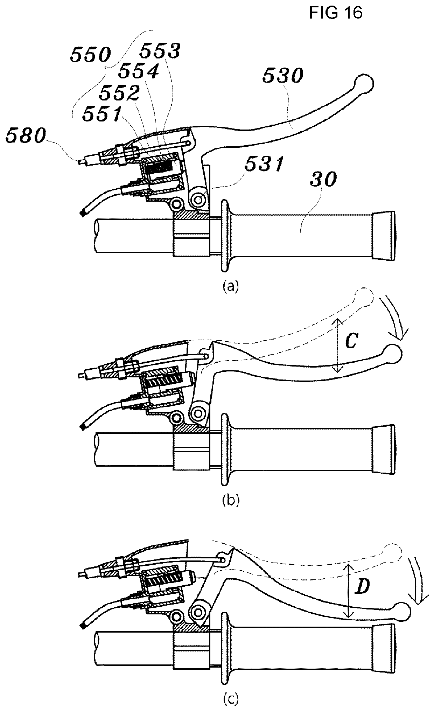

The operation process of the first brake operator 530 is described with reference to FIG. 16. Similar to the embodiments described above, only the regenerative brake system 10 is operated in the first operation stroke C by the contact member 550, but a control signal that operates the mechanical brake system 20 by pulling the brake wire 580 connected to a side of the first brake operator 530 is transmitted within the second operation stroke D (for reference, as shown in FIG. 16(b), even though the first brake operator 530 is rotated within the first operation stroke C, the brake wire 580 connected to a side of the first brake operator 530 is pulled, but the mechanical brake system 20 is to operate from when the brake wire 580 is further pulled in the period of the second operation stroke D without operating when the brake wire 580 is pulled in the period of the first operation stroke C and is operated). Obviously, the mechanical brake system 20 may operate together with the regenerative brake system 10 from the first operation stroke C, and in this case, the regenerative brake system 10 may be operated by an on-off type or variable control signal.

Accordingly, even if the mechanical brake system 20 is controlled through the brake wire 580, the regenerative brake system 10 and the mechanical brake system 20 can be controlled together only by controlling the first brake operator 530.

Although various embodiments of the present invention were described above, those embodiments are only examples for achieving the spirit of the present invention, and any changes or modifications that achieve the spirit of the present invention should be construed as being included in the present invention.

## Claims

1. An electric car capable of adjusting sound that includes a regenerative brake system, the electric car comprising: a drive operator driving an electric motor of the electric car by rotating, a driving controller controlling driving and braking of the electric car, and a sound controller controlling sound generated by the electric car, wherein the drive operator drives the electric car by rotating in a first direction, and is rotated in a second direction and returned to an initial position when the drive operator is released after being rotated, the driving controller operates the regenerative brake system in accordance rotation of the drive operator in the second direction, and the sound controller output a sound showing that a battery is being charged when the regenerative brake system is operated.

2. The electric car of claim 1, wherein the sound controller includes an acceleration sound output module outputting an acceleration sound of an engine when the electric car is accelerated by rotation of the drive operator, and a regenerative sound output module outputting a sound showing that the battery is being charged when the regenerative brake system is operated, and the acceleration sound output module and the regenerative sound output module output different sounds that are discriminated.

3. The electric car of claim 2, wherein the sound controller includes:
a preparation sound output module outputting a preparation sound showing that the electric car can be started when power is supplied to the electric car;
a start sound output module outputting a start sound when the electric car is started after the preparation sound is output, and
an engine sound output module outputting an engine sound showing that the electric car has been started after the start sound is output for a predetermined time.

4. The electric car of claim 2, further comprising a regenerative brake operator controlling the regenerative brake system, wherein the regenerative sound output module includes: a first regenerative sound output module outputting a sound showing that the battery is being charged when the regenerative brake system is operated in accordance with rotation of the drive operator in the second direction; and a second regenerative sound output module outputting a sound showing that the battery is being charged when the regenerative brake system is operated by the regenerative brake operator.

5. The electric car of claim 4, wherein the second regenerative sound output module shows that the battery is rapidly charged and rapid braking is performed by outputting a sound higher than the sound output by the first regenerative sound output module, and controls the output sound in accordance with the degree of operation of the regenerative brake operator.

6. The electric car of claim 1, further comprising a sound operator controlling sound output of the electric car, wherein the sound controller includes a driving sound controller controlling sound related to driving such as acceleration and driving of the electric car, and a music playback controller controlling playback of music; the sound operator includes a mode changer controlling operation of a mode controller, an on-off unit playing or stopping music, a direction controller controlling volume or order of playback of music, and a repeat controller repeatedly playing music; and when the mode changer is pressed, output of a driving sound by the driving sound controller, output of music by the music playback controller, and a mute mode not outputting any sound are sequentially selected.

7. The electric car of claim 6, wherein the direction controller includes a first direction controller and a second direction controller disposed symmetrically to each other, wherein the first direction controller selects and plays previous music when being pressed short and decreases volume when being pressed long, and the second direction controller selects and plays next music when being pressed short and increases volume when being pressed long.

8. The electric car of claim 1, wherein the driving controller includes a drive operator rotation sensing module sensing rotation of the drive operator and a regenerative brake system operation module operating the regenerative brake system in accordance with rotation of the drive operator sensed by the drive operator rotation sensing module, wherein the regenerative brake system operation module operates the regenerative brake system when the drive operator rotating in an opposite direction after rotating in a direction for driving the electric motor is sensed or the drive operator returning to an initial position is sensed by the drive operator rotation sensing module.

9. The electric car of claim 8, wherein the driving controller drives again the electric motor such that the electric motor returns to an original speed according to rotation of the drive operator when the drive operator rotates again in one direction while the regenerative brake system is operated.
